# EUROPÄISCHE PATENTSCHRIFT

(11) **EP 3 341 113 B1**
(45) Veröffentlichungstag und Bekanntmachung des Hinweises auf die Patenterteilung: **08.04.2020**
(21) Anmeldenummer: 16757882.2
(22) Anmeldetag: 26.08.2016
(51) Int. Cl.: B01J 8/04, C01C 1/02

(54) **REAKTOR UND VERFAHREN ZUR KATALYTISCHEN UMSETZUNG EINES GASGEMISCHES**
REACTOR AND METHOD FOR CATALYTIC CONVERSION OF A GAS MIXTURE
RÉACTEUR ET PROCÉDÉ DE CONVERSION CATALYTIQUE D'UN MÉLANGE DE GAZ

(30) Priorität: 26.08.2015 DE 102015114201
(43) Veröffentlichungstag der Anmeldung: 04.07.2018
(73) Patentinhaber: thyssenkrupp Industrial Solutions AG, 45143 Essen (DE); thyssenkrupp AG, 45143 Essen (DE)
(72) Erfinder: MICHEL, Reinhard, 44797 Bochum (DE); KINNER, Andreas, 45663 Recklinghausen (DE)
(74) Vertreter: thyssenkrupp Intellectual Property GmbH
(86) Internationale Anmeldenummer: PCT/EP2016/070194
(87) Internationale Veröffentlichungsnummer: WO 2017/032880

(56) Entgegenhaltungen:
- EP-A1- 0 931 586
- EP-A2- 0 222 069
- EP-A2- 0 332 757
- DE-A1- 1 957 696
- DE-B1- 2 126 211

## Beschreibung

### Stand der Technik

Die vorliegende Erfindung betrifft einen Reaktor zur katalytischen Umsetzung eines Gasgemischs, insbesondere zur katalytischen Ammoniaksynthese aus einem Gasgemisch umfassend im Wesentlichen Stickstoff und Wasserstoff, mit einem Druckbehälter, welcher einen Einlass für das Gasgemisch und einen Auslass für das Reaktionsprodukt aufweist, mit einem ersten Katalysatorbett, einem zweiten Katalysatorbett und einem dritten Katalysatorbett, welche derart angeordnet sind, dass das durch den Einlass eingeleitete Gasgemisch zunächst durch das erste Katalysatorbett, dann durch das zweite Katalysatorbett und schließlich durch das dritte Katalysatorbett zum Auslass geleitet wird, mit einem ersten Wärmetauscher zum Abkühlen des aus dem ersten Katalysatorbett ausströmenden Gasgemischs und mit einem zweiten Wärmetauscher zum Abkühlen des aus dem zweiten Katalysatorbett ausströmenden Gasgemischs und wobei das erste Katalysatorbett, das zweite Katalysatorbett und das dritte Katalysatorbett in einem zylindrischen Reaktionsbereich des Druckbehälters angeordnet sind, wobei der Druckbehälter ein entlang einer Zylinderachse (Z) des Reaktionsbereichs verlaufendes Zentralrohr aufweist, über welches der Einlass des Druckbehälters mit dem dritten Wärmetauscher verbunden ist. Ferner betrifft die Erfindung einen Einsatz für einen Druckbehälter eines derartigen Reaktors. Ein weiterer Gegenstand der Erfindung ist ein Verfahren zur katalytischen Umsetzung eines Gasgemischs, insbesondere zur katalytischen Ammoniaksynthese aus einem Gasgemisch umfassend im Wesentlichen Stickstoff und Wasserstoff, in einem Reaktor mit einem Druckbehälter, wobei das Gasgemisch durch einen Einlass des Druckbehälters eingeleitet wird und das Reaktionsprodukt durch einen Auslass des Druckbehälters abgezogen wird, wobei das durch den Einlass eingeleitete Gasgemisch zunächst durch das erste Katalysatorbett, dann durch das zweite Katalysatorbett und schließlich durch das dritte Katalysatorbett zum Auslass geleitet wird, wobei das aus dem ersten Katalysatorbett ausströmende Gasgemisch in einem ersten Wärmetauscher abgekühlt wird und wobei das aus dem zweiten Katalysatorbett ausströmende Gasgemisch in einem zweiten Wärmetauscher abgekühlt wird und wobei das erste Katalysatorbett, das zweite Katalysatorbett und das dritte Katalysatorbett in einem zylindrischen Reaktionsbereich des Druckbehälters angeordnet sind, wobei der Druckbehälter ein entlang einer Zylinderachse (Z) des Reaktionsbereichs verlaufendes Zentralrohr aufweist, über welches der Einlass des Druckbehälters mit dem dritten Wärmetauscher verbunden ist.

Ein Reaktor zur katalytischen Umsetzung eines Gasgemischs ist beispielsweise aus der DE 10 2006 061 847 A1 bekannt. Dieser Reaktor wird zur Ammoniaksynthese aus einem Gasgemisch eingesetzt, welches im Wesentlichen Stickstoff und Wasserstoff umfasst. Der bekannte Reaktor weist einen Druckbehälter mit einem im oberen Bereich des Druckbehälters angeordneten Einlass für das Gasgemisch und einem im unteren Bereich des Druckbehälters angeordneten Auslass für das Reaktionsprodukt auf. Im Bereich zwischen dem Einlass und dem Auslass sind insgesamt drei Katalysatorbetten angerordnet, welche von dem eingeleiteten Gasgemisch hintereinander durchströmt werden.

DE 697 32 781 T2 offenbart ein Verfahren zum Nachrüsten eines heterogenen, exothermen Synthesereaktors welcher eine äußere Hülle und eine Vielzahl übereinander und im gegenseitigen Abstand zueinander liegender katalytischer Betten umfasst.

EP 0 222 069 A2 offenbart einen Konverter für die heterogene Synthese von beispielsweise Ammoniak, Methanol oder höheren Alkoholen. Der Konverter umfasst einen inneren Einsatz und eine Anzahl n katalytischer Betten.

EP 2 759 338 A1 offenbart einen katalytischen Multi-Bett Konverter mit Zwischenbettwärmetauschern.

EP 2 610 001 A1 offenbart einen adiabatischen katalytischen Multi-Bett Konverter mit Zwischenbettwärmetauschern.

Die katalytische Ammoniaksynthese aus Wasserstoff und Stickstoff ist eine exotherme Reaktion. Es besteht die Gefahr, dass die Katalysatorbetten durch die freiwerdende Reaktionswärme zu stark erwärmt werden und dadurch vorzeitig altern. Zu Abführung der Reaktionswärme sind daher den im Strömungsfluss des Gasgemisches an erster und zweiter Stelle angeordneten Katalysatorbetten Wärmetauscher zugeordnet, welche das aus dem jeweiligen Katalysatorbett austretende Gasgemisch abkühlen, bevor es in das nachfolgende Katalysatorbett einströmt. Das aus dem unteren Katalysatorbett ausströmende Gasgemisch wird über den Auslass des Druckbehälters abgezogen.

Bei dem bekannten Reaktor hat es sich für einige Anwendungsfälle als nachteilig herausgestellt, dass das aus dem Druckbehälter austretende Reaktionsprodukt relativ hohe Temperaturen aufweist. Die das Reaktionsprodukt aufnehmenden Anlagen, welche die Reaktionsprodukte des Reaktors aufnehmen, werden daher mit erhöhten Temperaturen beansprucht.

### Offenbarung der Erfindung

Die Aufgabe der vorliegenden Erfindung ist es, die thermische Beanspruchung solcher Anlagen zu verringern, welche Reaktionsprodukte des Reaktors aufnehmen.

Bei einem Reaktor der eingangs genannten Art wird die Aufgabe dadurch gelöst, dass der Reaktor einen dritten Wärmetauscher zum Abkühlen des aus dem dritten Katalysatorbett in Richtung des Auslasses ausströmenden Gasgemischs aufweist.

Durch den dritten Wärmetauscher kann das aus dem dritten Katalysatorbett austretende Gasgemisch, welches insbesondere Reaktionsprodukte wie beispielsweise gasförmiges Ammoniak enthält, innerhalb des Druckbehälters abgekühlt werden, bevor es über den Auslass des Druckbehälters abgezogen wird. Durch den dritten Wärmetauscher kann somit die thermische Beanspruchung solcher Anlagen verringert werden, welche die Reaktionsprodukte des Reaktors aufnehmen. Es ist nicht erforderlich, den Druck oder die Temperatur innerhalb des Druckbehälters zu verändern, um die Temperatur der austretenden Reaktionsprodukte zu beeinflussen. Zudem kann die Wärme, welche von dem aus dem dritten Katalysatorbett ausströmenden Gasgemisch abgegeben wird, genutzt werden, um das in den Druckbehälter einströmende Gasgemisch zu erwärmen.

Erfindungsgemäß sind das erste Katalysatorbett, das zweite Katalysatorbett und das dritte Katalysatorbett in einem zylindrischen Reaktionsbereich des Druckbehälters angeordnet, wobei der Druckbehälter ein entlang einer Zylinderachse des Reaktionsbereichs verlaufendes Zentralrohr aufweist, über welches der Einlass des Druckbehälters mit dem dritten Wärmetauscher verbunden ist. Über das Zentralrohr kann das über den Einlass zugeführte Gasgemisch zunächst dem dritten Wärmetauscher zugeführt werden, um durch die Wärme des aus dem dritten Katalysatorbett austretenden Gasgemischs erwärmt zu werden. Die Anordnung des Zentralrohrs auf der Zylinderachse bietet den konstruktiven Vorteil, dass das erste Katalysatorbett und das zweite Katalysatorbett sowie der erste Wärmetauscher und der zweite Wärmetauscher in dem das Zentralrohr umgebenden ringförmigen Raum angeordnet werden können. Dadurch ergibt sich, dass sowohl das Zentralrohr als auch der erste Wärmetauscher und der zweite Wärmetauscher demontierbar sind und einen Zugang zum Austausch des Katalysators insbesondere für das dritte Bett erheblich erleichtern. Zusätzlich ist in der erfindungsgemäßen Konstruktion der Austausch des kompletten Konvertereinsatzes möglich. Die erfindungsgemäße Ausgestaltung des Reaktors erlaubt überraschenderweise eine Reduzierung der Temperatur des eintretenden Gases. Die durch das Zentralrohr hergestellte Verbindung des Einlasses mit dem dritten Wärmetauscher ermöglicht dabei die rohrseitige Durchströmung aller drei Wärmetauscher zur Vorwärmung des kalten Eintrittsgases. Die in der exothermen Reaktion entstehende Wärme kann direkt zur Erwärmung des einströmenden Gases auf die für die Reaktion notwendige Ausgangstemperatur genutzt werden. Dies erlaubt die Zufuhr weniger heißer Gasströme und somit die direkte Einsparung von Energie zur Erwärmung. Gleichzeitig wirkt sich die niedrigere Gastemperatur in den Zuführungsleitungen positiv auf die Materialbelastung und Lebensdauer der Komponenten aus.

Als besonders vorteilhaft hat sich eine Ausgestaltung herausgestellt, bei welcher das Zentralrohr durch eine zentrale Ausnehmung des ersten Wärmetauschers und eine zentrale Ausnehmung des zweiten Wärmetauschers verläuft. Die Durchführung des Zentralrohrs durch zentrale Ausnehmungen des ersten Wärmetauschers und des zweiten Wärmetauschers ermöglicht es, Wärmeaustauschflächen der Wärmetauscher derart in dem die Ausnehmung umgebenden Bereich anzuordnen, dass die Größe der Wärmeaustauschfläche nicht negativ durch die Durchführung des Zentralrohrs beeinflusst wird.

Bevorzugt ist es ferner, wenn der erste Wärmetauscher, der zweite Wärmetauscher und der dritte Wärmetauscher derart miteinander verbunden sind, dass das Gasgemisch ausgehend von dem dritten Wärmetauscher durch den zweiten Wärmetauscher in den ersten Wärmetauscher geleitet wird. Die Verbindung des dritten Wärmetauschers mit dem zweiten Wärmetauscher und/oder die Verbindung des zweiten Wärmetauschers mit dem ersten Wärmetauscher kann über Leitungen erfolgen. Insofern wird es möglich, das in den Druckbehälter eingeleitete Gasgemisch im Gegenstrom zu dem durch die drei Katalysatorbetten strömenden Gasgemisch durch die drei Wärmetauscher des Reaktors zu leiten und dabei zu erwärmen.

Eine vorteilhafte Ausgestaltung sieht vor, dass das dritte Katalysatorbett hohlzylindrisch ausgebildet ist, wobei der dritte Wärmetauscher von dem dritten Katalysatorbett konzentrisch umgeben ist. Durch eine derartige Anordnung des dritten Wärmetauschers innerhalb eines Innenradius des hohlzylindrischen dritten Katalysatorbetts, ist es nicht erforderlich, zusätzlichen Bauraum für den dritten Wärmetauscher oberhalb oder unterhalb des dritten Katalysatorbetts innerhalb des Druckbehälters bereitzustellen. Bevorzugt ist der dritte Wärmetauscher auf der Zylinderachse des zylindrischen Reaktionsbereichs angeordnet. Besonders bevorzugt ist eine Ausgestaltung, bei welcher das erste Katalysatorbett und/ das zweite Katalysatorbett hohlzylindrisch ausgebildet sind. Der erste Wärmetauscher und/oder der zweite Wärmetauscher kann von dem ersten Katalysatorbett bzw. dem zweiten Katalysatorbett konzentrisch umgeben sein.

Bevorzugt ist der dritte Wärmetauscher als Rohr-Wärmetauscher, insbesondere als U-Rohr-Wärmetauscher, ausgebildet. Solche Rohr-Wärmetauscher können Rohre aufweisen, durch welche ein erstes Medium, beispielsweise das durch den Einlass einströmende Gasgemisch, strömt und einen die Rohre umgebenden Mantelraum, durch welche ein zweites Medium, beispielsweise das aus dem dritten Katalysatorbett strömende Gasgemisch, strömt. Besonders bevorzugt ist der dritte Wärmetauscher als U-Rohr-Wärmetauscher ausgebildet, welcher U-förmige Rohre aufweist. In die U-förmigen Rohre kann das durch den Einlass einströmende Gasgemisch eingeleitet werden. Durch die Verwendung eines U-Rohr-Wärmetauschers ergibt sich der konstruktive Vorteil, dass die Zuleitung und Abführung des durch die U-Rohre geleiteten Mediums, beispielsweise des durch den Einlass einströmenden Gasgemischs, auf derselben Seite des dritten Wärmetauschers erfolgen kann. Insofern ist es möglich, das Gasgemisch insbesondere durch das Zentralrohr von oben in den dritten Wärmetauscher einzuleiten und auch nach oben in Richtung des zweiten Wärmetauschers abzuführen. Bevorzugt ist es, wenn der Rohr-Wärmetauscher, insbesondere der U-Rohr-Wärmetauscher, einen die Rohre umgebenden Mantelraum aufweist, in welchem Umlenkbleche angeordnet sind, über welche das aus dem dritten Katalysatorbett ausströmende Gasgemisch umgelenkt wird. Die Umlenkbleche können ringförmig und/oder scheibenförmig ausgestaltet sein. Besonders bevorzugt ist die Kombination von dem wie voranstehend beschriebenen entlang einer Zylinderachse des Reaktionsbereichs verlaufenden Zentralrohr und U-Rohr-Wärmetauscher. Diese Kombination ermöglicht eine besonders effiziente Ausnutzung der Reaktionswärme zur Erhitzung des eintretenden Gasstromes und damit verbesserte Energiebilanz des Reaktors und der Anlage.

Eine vorteilhafte Ausgestaltung sieht vor, dass der dritte Wärmetauscher über eine Bypass-Leitung mit einem Steuereinlass des Druckbehälters verbunden ist. Über den Steuereinlass und die Bypass-Leitung kann während des Betriebs des Reaktors ein Gas oder Gasgemisch zugeleitet werden, welches eine Temperatur aufweist, die von der Temperatur des über den Einlass des Druckbehälters eingeleiteten Gasgemischs abweicht. Insofern ist es anhand der Bypass-Leitung und des Steuereinlasses möglich, die Temperatur des Gasgemischs in dem dritten Wärmetauscher einzustellen. Besonders bevorzugt weist der Wärmetauscher einen thermisch mit dem dritten Katalysatorbett gekoppelten Mantelraum auf, in welchen die Bypass-Leitung mündet, so dass es möglich ist, anhand der Bypass-Leitung und des Steuereinlasses die Temperatur des dritten Katalysatorbetts einzustellen. Um eine Steuerung und/oder Regelung der Temperatur innerhalb des ersten, zweiten und/oder dritten Katalysatorbetts zu ermöglichen, kann der Reaktor einen oder mehrere Temperatursensoren aufweisen, welche insbesondere innerhalb des ersten, zweiten und/oder dritten Katalysatorbetts angeordnet sind. Der Temperatursensor kann insbesondere als Thermoelement ausgebildet sein.

Bevorzugt ist es, wenn das erste Katalysatorbett, das zweite Katalysatorbett und das dritte Katalysatorbett derart innerhalb des Druckbehälters angeordnet sind, dass sie von dem Gasgemisch in einer radialen Strömungsrichtung durchströmbar sind.

Zur Lösung der Aufgabe wird ferner ein Einsatz für einen Druckbehälter eines Reaktors zur katalytischen Umsetzung eines Gasgemischs vorgeschlagen, insbesondere eines Reaktors zur katalytischen Ammoniaksynthese aus einem Gasgemisch umfassend im Wesentlichen Stickstoff und Wasserstoff, mit einem ersten Katalysatorbett, einem zweiten Katalysatorbett und einem dritten Katalysatorbett, welche derart angeordnet sind, dass das durch einen Einlass des Druckbehälters eingeleitete Gasgemisch zunächst durch das erste Katalysatorbett, dann durch das zweite Katalysatorbett und schließlich durch das dritte Katalysatorbett zum Auslass geleitet wird, mit einem ersten Wärmetauscher zum Abkühlen des aus dem ersten Katalysatorbett ausströmenden Gasgemischs und mit einem zweiten Wärmetauscher zum Abkühlen des aus dem zweiten Katalysatorbett ausströmenden Gasgemischs, wobei der Einsatz einen dritten Wärmetauscher zum Abkühlen des aus dem dritten Katalysatorbett in Richtung eines Auslasses des Druckbehälters ausströmenden Gasgemischs aufweist und wobei das erste Katalysatorbett, das zweite Katalysatorbett und das dritte Katalysatorbett in einem zylindrischen Reaktionsbereich des Druckbehälters angeordnet sind, wobei der Druckbehälter ein entlang einer Zylinderachse des Reaktionsbereichs verlaufendes Zentralrohr aufweist, über welches der Einlass des Druckbehälters mit dem dritten Wärmetauscher verbunden ist. Wie voranstehend beschrieben ermöglicht der erfindungsgemäße Einsatz den Austausch des selbigen. Das durchgehende Zentralrohr ermöglicht weiterhin die rohrseitige Durchströmung aller drei Wärmetauscher zur Vorwärmung des kalten Eintrittsgases.

Mit dem Einsatz können dieselben Vorteile erreicht werden, wie sie bereits im Zusammenhang mit dem erfindungsgemäßen Reaktor beschrieben worden sind. Der Einsatz kann nach Art einer Nachrüstlösung in einen Druckbehälter eines bereits installierten Reaktors eingesetzt werden.

Bei einem Verfahren der eingangs genannten Art wird die Aufgabe dadurch gelöst, dass das aus dem dritten Katalysatorbett in Richtung des Auslasses ausströmende Gasgemisch in einem dritten Wärmetauscher abgekühlt wird. Das Verfahren zur katalytischen Umsetzung eines Gasgemischs, insbesondere zur katalytischen Ammoniaksynthese aus einem Gasgemisch umfassend im Wesentlichen Stickstoff und Wasserstoff, in einem Reaktor mit einem Druckbehälter, beinhaltet das Einleiten des Gasgemisches durch einen Einlass des Druckbehälters und abziehen des Reaktionsproduktes durch einen Auslass des Druckbehälters. Anschließend wird das durch den Einlass eingeleitete Gasgemisch zunächst durch das erste Katalysatorbett, dann durch das zweite Katalysatorbett und schließlich durch das dritte Katalysatorbett zum Auslass geleitet. Das aus dem ersten Katalysatorbett ausströmende Gasgemisch wird in einem ersten Wärmetauscher abgekühlt und das aus dem zweiten Katalysatorbett ausströmende Gasgemisch wird in einem zweiten Wärmetauscher abgekühlt. Das Verfahren ist dadurch gekennzeichnet, dass das aus dem dritten Katalysatorbett in Richtung des Auslasses ausströmende Gasgemisch in einem dritten Wärmetauscher abgekühlt wird. Im Verfahren sind das erste Katalysatorbett, das zweite Katalysatorbett und das dritte Katalysatorbett in einem zylindrischen Reaktionsbereich des Druckbehälters angeordnet, wobei der Druckbehälter ein entlang einer Zylinderachse des Reaktionsbereichs verlaufendes Zentralrohr aufweist, über welches der Einlass des Druckbehälters mit dem dritten Wärmetauscher verbunden ist.

Bei dem Verfahren können dieselben Vorteile erreicht werden, wie sie bereits im Zusammenhang mit dem erfindungsgemäßen Reaktor beschrieben worden sind.

Bei dem Einsatz und dem Verfahren können auch die im Zusammenhang mit dem Reaktor beschriebenen vorteilhaften Merkmale allein oder kumulativ Verwendung finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnung. Die Zeichnung illustriert dabei lediglich eine beispielhafte Ausführungsform der Erfindung, welche den Erfindungsgedanken nicht einschränkt.

### Kurze Beschreibung der Figur

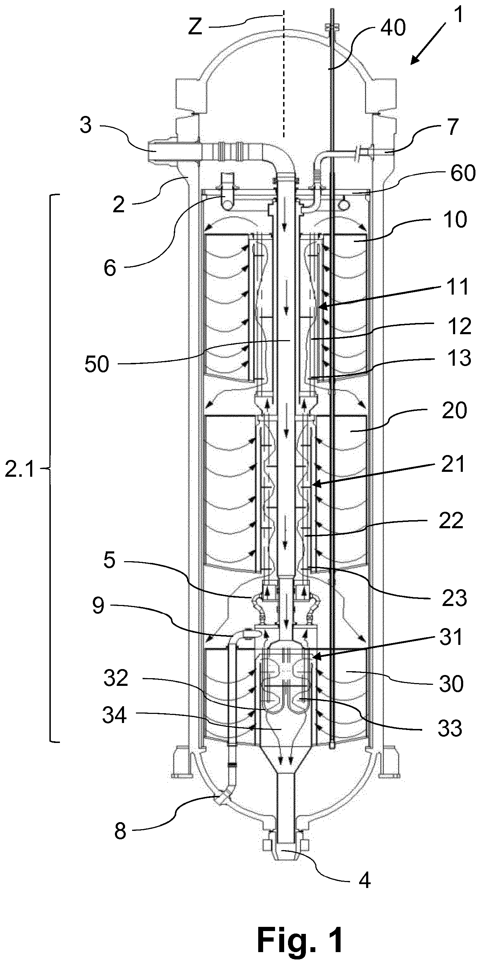

Die **Fig. 1** zeigt einen Reaktor zur katalytischen Umsetzung eines Gasgemischs gemäß einem Ausführungsbeispiel in einer schematischen Schnittdarstellung.

### Ausführungsformen der Erfindung

In der **Fig. 1** ist eine Schnittdarstellung eines Ausführungsbeispiels eines Reaktors 1 gezeigt, welcher in einem Verfahren zur katalytischen Ammoniaksynthese eingesetzt werden kann. Der Reaktor 1 weist einen Druckbehälter 2 auf, welcher einen Einlass 3 zum Einleiten eines Gasgemisches und einen Auslass 4 zum Abführen von Reaktionsprodukten aufweist. Der Einlass 3 ist seitlich im oberen Bereich des Druckbehälters 2 vorgesehen und kann alternativ an der Oberseite des Druckbehälters 2 angeordnet sein. Der Auslass 4 befindet sich an der Unterseite des Druckbehälters 2. Im Bereich zwischen dem Einlass 3 und dem Auslass 4 umfasst der Druckbehälter 2 einen Reaktionsbereich 2.1, der eine im Wesentlichen zylindrische Form aufweist. Der Reaktor 1 wird im Betrieb in der in Fig. 1 aufrechten Stellung betrieben, in welcher der Druckbehälter 2 vertikal angeordnet ist.

Der Druckbehälter 2 ist gasdicht abgeschlossen, so dass innerhalb des Druckbehälters 2 ein für die Ammoniaksynthese förderlicher Druck, bevorzugt im Bereich größer 200 bar, besonders bevorzugt im Bereich von 250 bar bis 350 bar eingestellt werden kann.

Innerhalb des Druckbehälters 2, insbesondere in dem Reaktionsbereich 2.1 des Druckbehälters 2, sind insgesamt drei Katalysatorbetten 10, 20, 30 angeordnet. Die Katalysatorbetten 10, 20, 30 können als mit einem als Schüttgut ausgebildeten Katalysator bestückte Katalysatorkörbe ausgestaltet sein. Die Katalysatorbetten 10, 20, 30 können einen eisenhaltigen Katalysator aufweisen. Ein erstes Katalysatorbett 10 ist einem oberen Abschnitt des Reaktionsbereichs 2.1 angeordnet. Unterhalb des ersten Katalysatorbetts 10 ist beabstandet ein zweites Katalysatorbett 20 angeordnet. Im unteren Abschnitt des Reaktionsbereiches 2.1 ist, beabstandet von dem zweiten Katalysatorbett 20, ein drittes Katalysatorbett 30 vorgesehen. Insofern befindet sich das zweite Katalysatorbett 20 zwischen dem ersten Katalysatorbett 10 und dem dritten Katalysatorbett 30.

Die Führung des Gasgemischs durch die Katalysatorbetten 10, 20, 30 erfolgt derart, dass das eingeleitete Gasgemisch zunächst durch das obere, erste Katalysatorbett 10, dann durch das mittlere, zweite Katalysatorbett 20 und schließlich durch das untere, dritte Katalysatorbett 30 geleitet wird.

Die Katalysatorbetten 10, 20, 30 weisen eine hohlzylindrische Grundform auf und sind konzentrisch um eine Zylinderachse Z des Reaktionsbereichs 2.1 angeordnet. Zwischen den Katalysatorbetten 10, 20, 30 und der Innenwand des Druckbehälters 2 ist ein ringförmiger Freiraum vorgesehen, über welchen das Gasgemisch derart an die Katalysatorbetten 10, 20, 30 herangeführt wird, dass es die Katalysatorbetten 10, 20, 30 jeweils radial, also in einer Richtung senkrecht zur Zylinderachse Z, durchströmt. Insofern wird das Gasgemisch in dem Reaktor 1 derart geführt, dass es an der äußeren Mantelfläche des jeweiligen Katalysatorbetts 10, 20, 30 in das Katalysatorbett 10, 20, 30 eintritt, das Katalysatorbett 10, 20, 30 durchströmt und schließlich an der inneren Mantelfläche des Katalysatorbetts 10, 20, 30 austritt. Im dem Bereich, den die innere Mantelfläche der hohlzylindrischen Katalysatorbetten 10, 20, 30 einschließt, ist jeweils ein Wärmetauscher 11, 21, 31 angeordnet, in welchen das aus dem jeweiligen Katalysatorbett 10, 20, 30 austretende und durch die exotherme Reaktion erwärmte Gasgemisch, welches insbesondere auch das Reaktionsprodukt Ammoniak enthält, eingeleitet wird.

In dem ersten Wärmetauscher 11, welcher konzentrisch von dem ersten Katalysatorbett 10 umgeben ist, wird das aus dem ersten Katalysatorbett 10 austretende Gasgemisch abgekühlt. Durch das Abkühlen kann verhindert werden, dass in Strömungsrichtung nachfolgende zweite Katalysatorbett 20 durch überhöhte Temperaturen beaufschlagt wird und vorzeitigt altert. Das aus dem ersten Katalysatorbett 10 austretende Gasgemisch wird um Umlenkbleche 13 des ersten Wärmetauschers 11 geführt. Der zweite Wärmetauscher 21 ist konzentrisch von dem zweiten Katalysatorbett 20 umgeben und kühlt das aus dem zweiten Katalysatorbett 20 austretende Gasgemisch, so dass eine Überhitzung und vorzeitige Alterung des in Strömungsrichtung nachfolgenden dritten Katalysatorbetts 30 verhindert werden kann. Das aus dem zweiten Katalysatorbett 20 austretende Gasgemisch wird um Umlenkbleche 23 des zweiten Wärmetauschers 21 geführt
Bei dem Reaktor 1 ist zudem ein dritter Wärmetauscher 31 vorgesehen, in welchen das aus dem dritten Katalysatorbett 30 ausströmende Gasgemisch eingeleitet und abgekühlt wird, bevor es durch den Auslass 4 des Druckbehälters 2 abgegeben wird. Dies bringt den Vorteil mit sich, dass das aus dem Auslass 4 austretende Gasgemisch, welches die Reaktionsprodukte enthält, ein reduzierte Temperatur aufweist und dem Reaktor nachfolgende Anlagen thermisch weniger belastet werden.

Zudem kann die in dem Reaktor entstehende Reaktionswärme zum Vorwärmen des in den Druckbehälter 2 des Reaktors 1 eingeleiteten Gasgemischs genutzt werden, bevor diese den Katalysatorbetten 10, 20, 30 zugeleitet wird. Der dritte Wärmetauscher 31 ist über ein entlang der Zylinderachse Z verlaufendes Zentralrohr 50 mit dem Einlass 3 des Druckbehälters 2 verbunden, so dass das durch den Einlass 3 einströmende Gasgemisch zunächst dem dritten Wärmetauscher 31 zugeführt wird. Das Zentralrohr 50 verläuft durch Ausnehmungen in dem ersten Wärmetauscher 11 und dem zweiten Wärmetauscher 21, welche beide als Rohr-wärmetauscher, insbesondere Rohrbündelwärmetauscher ausgestaltet sind. Der dritte Wärmetauscher 31 ist als U-Rohr-Wärmetauscher ausgebildet, der einen Mantelraum 34 und durch den Mantelraum 34 verlaufende U-Rohre 32 aufweist. Der Mantelraum 34 wird von dem heißen aus dem dritten Katalysatorbett 30 austretenden Gasgemisch durchströmt. Innerhalb des Mantelraums 34 sind ringförmige und/oder scheibenförmige Umlenkbleche angeordnet, über welche das aus dem dritten Katalysatorbett 30 austretenden Gasgemisch geführt wird. Das Zentralrohr 50 ist derart mit dem dritten Wärmetauscher 31 gekoppelt, dass das durch das Zentralrohr strömende Gasgemisch in die U-Rohre 32 des dritten Wärmetauschers 31 eingeleitet wird. Das durch die U-Rohre 32 des Dritten Wärmetauschers 31 strömende Gasgemisch wird dabei erwärmt.

Die Ausgestaltung des dritten Wärmetauschers 31 als U-Rohr-Wärmetauscher bringt den Vorteil mit sich, dass sowohl die Zuführung des vorzuwärmenden Gasgemisches als auch die Ableitung des vorgewärmten Gasgemisches von derselben Seite, hier der Oberseite, des dritten Wärmetauschers 31 erfolgen kann. Der dritte Wärmetauscher 31 ist an seiner dem zweiten Wärmetauscher 21 zugewandten Oberseite mit dem Zentralrohr 50 als Zuführleitung und mehreren Ableitungsrohren 5 verbunden. Die Ableitungsrohre 5 verbinden den dritten Wärmetauscher 31 mit dem zweiten Wärmetauscher 21. Die Ableitungsrohre 5 können demontierbar ausgebildet sein. Das aus dem dritten Wärmetauscher 31 austretende Gasgemisch wird durch Wärmetauscherrohre 22 des zweiten Wärmetauschers 21 geführt und dann dem ersten Wärmetauscher 11 zugeleitet. In dem ersten Wärmetauscher 11 verläuft das Gasgemisch durch Wärmetauscherrohre 12 und tritt dann an der Oberseite des ersten Wärmetauschers 11 aus. Das durch die drei Wärmetauscher 11, 21, 31 vorgewärmte Gasgemisch wird dann dem ersten Katalysatorbett 10 zugeleitet. Da das in den Druckbehälter 2 geleitete Gasgemisch durch drei Wärmetauscher 11, 21, 31 vorgewärmt wird, welche den drei Katalysatorbetten 10, 20, 30 zugeordnet sind, kann das eingeleitete Gasgemisch im Vergleich zu einem Reaktor mit lediglich zwei Wärmetauschern stärker vorgewärmt werden. Insofern ist es möglich, ein Gasgemisch mit verringerter Temperatur in den Einlass 3 des Druckbehälters 2 einzuleiten.

Der Druckbehälter 2 des Reaktors 1 weist zudem drei Steuereinlässe 6, 7, 8 auf, über welche die Temperatur im Inneren des Druckbehälters 2, insbesondere in den Katalysatorbetten 10, 20, 30, eingestellt werden kann. Ein erster Steuereinlass 6 ist in der Darstellung in Fig. 1 nur unvollständig gezeigt und durchstößt den Druckbehälter 2 an der Oberseite. Der erste Steuereinlass 6 ist mit einer oberhalb des ersten Katalysatorbetts 10 angeordneten Ringleitung verbunden, welche mit Austrittsöffnungen versehen ist. Über den ersten Steuereinlass 6 kann zum Anfahren des Reaktors 1 ein heißes Gasgemisch zugeleitet werden. Im Betrieb des Reaktors 1 kann über den ersten Steuereinlass 6 ein Gasgemisch mit einer vorgegebenen Temperatur zugeleitet werden, um die Temperatur des ersten Katalysatorbetts 10 einzustellen. Der zweite Steuereinlass 7 ist mit einem konzentrisch um das Zentralrohr 50 verlaufendem Mantelrohr verbunden, welches durch eine Ausnehmung in dem ersten Wärmetauscher 11 bis zu dem zweiten Katalysatorbett 20 verläuft. Im Betrieb des Reaktors 1 kann über den zweiten Steuereinlass 7 ein Gasgemisch mit einer vorgegebenen Temperatur zugeleitet werden, um die Temperatur des zweiten Katalysatorbetts 20 einzustellen.

Ein dritter Steuereinlass 8 befindet sich an der Unterseite des Druckbehälters 2. Der dritte Steuereinlass 8 ist über eine Bypass-Leitung 9 mit dem dritten Wärmetauscher 31 verbunden. Die Bypass-Leitung 9 mündet in den Mantelraum 34 des dritten Wärmetauschers 31, so dass das über den dritten Steuereinlass 8 zugeführte Gasgemisch in den Mantelraum 32 geführt wird. Der dritte Wärmetauscher 31, insbesondere der Mantelraum 32 des dritten Wärmetauschers 31, ist thermisch mit dem dritten Katalysatorbett 30 gekoppelt. Im Betrieb des Reaktors 1 kann über den dritten Steuereinlass 8 ein Gasgemisch mit einer vorgegebenen Temperatur zugeleitet werden, um die Temperatur des dritten Katalysatorbetts 30 einzustellen.

Insofern kann bei dem Reaktor 1 die Temperatur in den drei Katalysatorbetten 10, 20, 30 unabhängig voneinander eingestellt werden. Bevorzugt liegt die Temperatur innerhalb der Katalysatorbetten im Bereich von 450°C bis 550°C.

Der Reaktor 1 weist ferner einen Temperatursensor 40 auf, der mehrere Thermoelemente umfasst. Ein erstes Thermoelement ist innerhalb des ersten Katalysatorbetts 10, ein zweites Thermoelement ist innerhalb des zweiten Katalysatorbetts 20 und ein drittes Thermoelement innerhalb des dritten Katalysatorbetts 30 angeordnet. Über die Thermoelemente kann die Temperatur in den Katalysatorbetten 10, 20, 30 erfasst werden.

Bei dem Reaktor 1 sind die Katalysatorbetten 10, 20, 30, die Wärmetauscher 11, 21, 31 sowie das Zentralrohr 50 und die die Wärmetauscher 11, 21, 31 verbindenden Rohre 5 als Teil eines Einsatzes 60 ausgebildet, welcher von dem Druckbehälter 2 trennbar ist. Der Einsatz 60 kann als Ganzes aus dem Druckbehälter 2 entnommen werden, um Wartungsarbeiten durchzuführen. Es ist aber auch möglich, den Einsatz 60 als Nachrüstteil in einen Druckbehälter 2 eines vorhandenen Reaktors 1 einzusetzen.

Mit dem Reaktor 1 kann ein Verfahren zur katalytischen Umsetzung eines Gasgemischs durchgeführt werden, insbesondere ein Verfahren zur katalytischen Ammoniaksynthese aus einem Gasgemisch umfassend im Wesentlichen Stickstoff und Wasserstoff. Hierbei wird das Gasgemisch durch den Einlass 3 des Druckbehälters 2 eingeleitet und das Reaktionsprodukt, insbesondere Ammoniak, wird durch den Auslass 4 des Druckbehälters 2 abgezogen. Das durch den Einlass 3 eingeleitete Gasgemisch wird zunächst durch das erste Katalysatorbett 10, dann durch das zweite Katalysatorbett 20 und schließlich durch das dritte Katalysatorbett 30 zum Auslass 4 geleitet. Dabei wird das aus dem ersten Katalysatorbett 10 ausströmende Gasgemisch in dem ersten Wärmetauscher 11 abgekühlt. Das aus dem zweiten Katalysatorbett 20 ausströmende Gasgemisch wird in dem zweiten Wärmetauscher 21 abgekühlt. Ferner wird das aus dem dritten Katalysatorbett 30 in Richtung des Auslasses 4 ausströmende Gasgemisch in dem dritten Wärmetauscher 31 abgekühlt.

Der vorstehend beschriebene Reaktor 1 zur katalytischen Umsetzung eines Gasgemischs, insbesondere zur katalytischen Ammoniaksynthese aus einem Gasgemisch umfassend im Wesentlichen Stickstoff und Wasserstoff, umfasst einen Druckbehälter 2, welcher einen Einlass 3 für das Gasgemisch und einen Auslass 4 für das Reaktionsprodukt aufweist. Ferner weist der Reaktor 1 ein erstes Katalysatorbett 10, ein zweites Katalysatorbett 20 und ein drittes Katalysatorbett 30 auf, welche derart angeordnet sind, dass das durch den Einlass 3 eingeleitete Gasgemisch zunächst durch das erste Katalysatorbett 10, dann durch das zweite Katalysatorbett 20 und schließlich durch das dritte Katalysatorbett 30 zum Auslass 4 geleitet wird. Darüber hinaus ist ein erster Wärmetauscher 11 zum Abkühlen des aus dem ersten Katalysatorbett 10 ausströmenden Gasgemischs und ein zweiter Wärmetauscher 21 zum Abkühlen des aus dem zweiten Katalysatorbett 20 ausströmenden Gasgemischs vorgesehen. Der Reaktor 1 umfasst zudem einen dritten Wärmetauscher 31 zum Abkühlen des aus dem dritten Katalysatorbett 30 in Richtung des Auslasses 4 ausströmenden Gasgemischs, wodurch die Austrittstemperatur des aus dem Reaktor 1 austretenden Reaktionsprodukts abgesenkt wird.

### Bezugszeichenliste

- 1: Reaktor
- 2: Druckbehälter
- 2.1: Reaktionsbereich
- 3: Einlass
- 4: Auslass
- 5: Rohr
- 6: erster Steuereinlass
- 7: zweiter Steuereinlass
- 8: dritter Steuereinlass
- 9: Bypass-Leitung
- 10: erstes Katalysatorbett
- 11: erster Wärmetauscher
- 12: Wärmetauscherrohr
- 13: Umlenkblech
- 20: zweites Katalysatorbett
- 21: zweiter Wärmetauscher
- 22: Wärmetauscherrohr
- 23: Umlenkblech
- 30: drittes Katalysatorbett
- 31: dritter Wärmetauscher
- 32: U-Rohr
- 33: Umlenkblech
- 34: Mantelraum
- 40: Temperatursensor
- 50: Zentralrohr
- 60: Einsatz
- Z: Zylinderachse

## Patentansprüche

1. Reaktor zur katalytischen Umsetzung eines Gasgemischs, insbesondere zur katalytischen Ammoniaksynthese aus einem Gasgemisch umfassend im Wesentlichen Stickstoff und Wasserstoff,
- mit einem Druckbehälter (2), welcher einen Einlass (3) für das Gasgemisch und einen Auslass (4) für das Reaktionsprodukt aufweist,
- mit einem ersten Katalysatorbett (10), einem zweiten Katalysatorbett (20) und einem dritten Katalysatorbett (30), welche derart angeordnet sind, dass das durch den Einlass (4) eingeleitete Gasgemisch zunächst durch das erste Katalysatorbett (10), dann durch das zweite Katalysatorbett (20) und schließlich durch das dritte Katalysatorbett (30) zum Auslass (4) geleitet wird,
- mit einem ersten Wärmetauscher (11) zum Abkühlen des aus dem ersten Katalysatorbett (10) ausströmenden Gasgemischs und
- mit einem zweiten Wärmetauscher (21) zum Abkühlen des aus dem zweiten Katalysatorbett (20) ausströmenden Gasgemischs,
**dadurch gekennzeichnet, dass**
der Reaktor (1) einen dritten Wärmetauscher (31) zum Abkühlen des aus dem dritten Katalysatorbett (30) in Richtung des Auslasses (4) ausströmenden Gasgemischs aufweist und dass das erste Katalysatorbett (10), das zweite Katalysatorbett (20) und das dritte Katalysatorbett (30) in einem zylindrischen Reaktionsbereich (2.1) des Druckbehälters (2) angeordnet sind, wobei der Druckbehälter (2) ein entlang einer Zylinderachse (Z) des Reaktionsbereichs (2.1) verlaufendes Zentralrohr (50) aufweist, über welches der Einlass (3) des Druckbehälters (2) mit dem dritten Wärmetauscher (31) verbunden ist.

2. Reaktor nach Anspruch 1, **dadurch gekennzeichnet, dass** das Zentralrohr (50) durch eine zentrale Ausnehmung des ersten Wärmetauschers (11) und eine zentrale Ausnehmung des zweiten Wärmetauschers (21) verläuft.

3. Reaktor nach einem der vorhergehenden Ansprüche, **dadurch gekennzeichnet, dass** der erste Wärmetauscher (11), der zweite Wärmetauscher (21) und der dritte Wärmetauscher (31), insbesondere über Leitungen (5), derart miteinander verbunden sind, dass das Gasgemisch ausgehend von dem dritten Wärmetauscher (31) durch den zweiten Wärmetauscher (21) in den ersten Wärmetauscher (11) geleitet wird.

4. Reaktor nach einem der vorhergehenden Ansprüche, **dadurch gekennzeichnet, dass** das dritte Katalysatorbett (30) hohlzylindrisch ausgebildet ist, wobei der dritte Wärmetauscher (31) von dem dritten Katalysatorbett (30) konzentrisch umgeben ist.

5. Reaktor nach einem der vorhergehenden Ansprüche, **dadurch gekennzeichnet, dass** der dritte Wärmetauscher (31) als Rohr-Wärmetauscher, insbesondere als U-Rohr-Wärmetauscher, ausgebildet ist.

6. Reaktor nach einem der vorhergehenden Ansprüche, **dadurch gekennzeichnet, dass** der dritte Wärmetauscher (31) über eine Bypass-Leitung (9) mit einem Steuereinlass (8) des Druckbehälters (2) verbunden ist.

7. Reaktor nach einem der vorhergehenden Ansprüche, **dadurch gekennzeichnet, dass** das erste Katalysatorbett (10), das zweite Katalysatorbett (20) und das dritte Katalysatorbett (30) derart innerhalb des Druckbehälters (2) angeordnet sind, dass sie von dem Gasgemisch in einer radialen Strömungsrichtung durchströmbar sind.

8. Einsatz für einen Druckbehälter (2) eines Reaktors (1) zur katalytischen Umsetzung eines Gasgemischs, insbesondere zur katalytischen Ammoniaksynthese aus einem Gasgemisch umfassend im Wesentlichen Stickstoff und Wasserstoff,
- mit einem ersten Katalysatorbett (10), einem zweiten Katalysatorbett (20) und einem dritten Katalysatorbett (30), welche derart angeordnet sind, dass das durch einen Einlass (3) des Druckbehälters (2) eingeleitete Gasgemisch zunächst durch das erste Katalysatorbett (10), dann durch das zweite Katalysatorbett (20) und schließlich durch das dritte Katalysatorbett (30) zum Auslass (4) geleitet wird,
- mit einem ersten Wärmetauscher (11) zum Abkühlen des aus dem ersten Katalysatorbett (10) ausströmenden Gasgemischs und
- mit einem zweiten Wärmetauscher (21) zum Abkühlen des aus dem zweiten Katalysatorbett (20) ausströmenden Gasgemischs,
**dadurch gekennzeichnet, dass**
der Einsatz (60) einen dritten Wärmetauscher (31) zum Abkühlen des aus dem dritten Katalysatorbett (30) in Richtung eines Auslasses (4) des Druckbehälters (2) ausströmenden Gasgemischs aufweist und dass das erste Katalysatorbett (10), das zweite Katalysatorbett (20) und das dritte Katalysatorbett (30) in einem zylindrischen Reaktionsbereich (2.1) des Druckbehälters (2) angeordnet sind, wobei der Druckbehälter (2) ein entlang einer Zylinderachse (Z) des Reaktionsbereichs (2.1) verlaufendes Zentralrohr (50) aufweist, über welches der Einlass (3) des Druckbehälters (2) mit dem dritten Wärmetauscher (31) verbunden ist.

9. Verfahren zur katalytischen Umsetzung eines Gasgemischs, insbesondere zur katalytischen Ammoniaksynthese aus einem Gasgemisch umfassend im Wesentlichen Stickstoff und Wasserstoff, in einem Reaktor (1) mit einem Druckbehälter (2),
- wobei das Gasgemisch durch einen Einlass (3) des Druckbehälters (2) eingeleitet wird und das Reaktionsprodukt durch einen Auslass (4) des Druckbehälters (2) abgezogen wird,
- wobei das durch den Einlass (3) eingeleitete Gasgemisch zunächst durch das erste Katalysatorbett (10), dann durch das zweite Katalysatorbett (20) und schließlich durch das dritte Katalysatorbett (30) zum Auslass (4) geleitet wird,
- wobei das aus dem ersten Katalysatorbett (10) ausströmende Gasgemisch in einem ersten Wärmetauscher (11) abgekühlt wird und
- wobei das aus dem zweiten Katalysatorbett (20) ausströmende Gasgemisch in einem zweiten Wärmetauscher (21) abgekühlt wird,
**dadurch gekennzeichnet, dass**
das aus dem dritten Katalysatorbett (30) in Richtung des Auslasses (4) ausströmende Gasgemisch in einem dritten Wärmetauscher (31) abgekühlt wird und wobei das erste Katalysatorbett (10), das zweite Katalysatorbett (20) und das dritte Katalysatorbett (30) in einem zylindrischen Reaktionsbereich (2.1) des Druckbehälters (2) angeordnet sind, wobei der Druckbehälter (2) ein entlang einer Zylinderachse (Z) des Reaktionsbereichs (2.1) verlaufendes Zentralrohr (50) aufweist, über welches der Einlass (3) des Druckbehälters (2) mit dem dritten Wärmetauscher (31) verbunden ist.

## Claims

1. Reactor for the catalytic conversion of a gas mixture, in particular for the catalytic ammonia synthesis from a gas mixture comprising substantially nitrogen and hydrogen,
- having a pressure vessel (2) which has an inlet (3) for the gas mixture and an outlet (4) for the reaction product,
- having a first catalyst bed (10), a second catalyst bed (20) and a third catalyst bed (30) which are arranged in such a way that the gas mixture which is introduced through the inlet (4) is guided first of all through the first catalyst bed (10), then through the second catalyst bed (20) and finally through the third catalyst bed (30) to the outlet (4),
- having a first heat exchanger (11) for cooling the gas mixture which flows out of the first catalyst bed (10), and
- having a second heat exchanger (21) for cooling the gas mixture which flows out of the second catalyst bed (20),
**characterized in that**
the reactor (1) has a third heat exchanger (31) for cooling the gas mixture which flows out of the third catalyst bed (30) in the direction of the outlet (4), and **in that** the first catalyst bed (10), the second catalyst bed (20) and the third catalyst bed (30) are arranged in a cylindrical reaction region (2.1) of the pressure vessel (2), the pressure vessel (2) having a central tube (50) which runs along a cylinder axis (Z) of the reaction region (2.1) and via which the inlet (3) of the pressure vessel (2) is connected to the third heat exchanger (31).

2. Reactor according to Claim 1, **characterized in that** the central tube (50) runs through a central recess of the first heat exchanger (11) and a central recess of the second heat exchanger (21).

3. Reactor according to either of the preceding claims, **characterized in that** the first heat exchanger (11), the second heat exchanger (21) and the third heat exchanger (31) are connected to one another, in particular via lines (5), in such a way that, starting from the third heat exchanger (31), the gas mixture is guided through the second heat exchanger (21) into the first heat exchanger (11).

4. Reactor according to one of the preceding claims, **characterized in that** the third catalyst bed (30) is of hollow-cylindrical configuration, the third heat exchanger (31) being surrounded concentrically by the third catalyst bed (30).

5. Reactor according to one of the preceding claims, **characterized in that** the third heat exchanger (31) is configured as a tube heat exchanger, in particular as a U-shaped tube heat exchanger.

6. Reactor according to one of the preceding claims, **characterized in that** the third heat exchanger (31) is connected via a bypass line (9) to a control inlet (8) of the pressure vessel (2).

7. Reactor according to one of the preceding claims, **characterized in that** the first catalyst bed (10), the second catalyst bed (20) and the third catalyst bed (30) are arranged within the pressure vessel (2) in such a way that they can be flowed through by the gas mixture in a radial flow direction.

8. Insert for a pressure vessel (2) of a reactor (1) for the catalytic conversion of a gas mixture, in particular for the catalytic ammonia synthesis from a gas mixture comprising substantially nitrogen and hydrogen,
- having a first catalyst bed (10), a second catalyst bed (20) and a third catalyst bed (30) which are arranged in such a way that the gas mixture which is introduced through the inlet (3) of the pressure vessel (2) is guided first of all through the first catalyst bed (10), then through the second catalyst bed (20) and finally through the third catalyst bed (30) to the outlet (4),
- having a first heat exchanger (11) for cooling the gas mixture which flows out of the first catalyst bed (10), and
- having a second heat exchanger (21) for cooling the gas mixture which flows out of the second catalyst bed (20),
**characterized in that**
the insert (60) has a third heat exchanger (31) for cooling the gas mixture which flows out of the third catalyst bed (30) in the direction of an outlet (4) of the pressure vessel (2), and **in that** the first catalyst bed (10), the second catalyst bed (20) and the third catalyst bed (30) are arranged in a cylindrical reaction region (2.1) of the pressure vessel (2), the pressure vessel (2) having a central tube (50) which runs along a cylinder axis (Z) of the reaction region (2.1) and via which the inlet (3) of the pressure vessel (2) is connected to the third heat exchanger (31).

9. Method for the catalytic conversion of a gas mixture, in particular for the catalytic ammonia synthesis from a gas mixture comprising substantially nitrogen and hydrogen, in a reactor (1) having a pressure vessel (2),
- the gas mixture being introduced through an inlet (3) of the pressure vessel (2), and the reaction product being removed through an outlet (4) of the pressure vessel (2),
- the gas mixture which is introduced through the inlet (3) being guided first of all through the first catalyst bed (10), then through the second catalyst bed (20) and finally through the third catalyst bed (30) to the outlet (4),
- the gas mixture which flows out of the first catalyst bed (10) being cooled in a first heat exchanger (11), and
- the gas mixture which flows out of the second catalyst bed (20) being cooled in a second heat exchanger (21),
**characterized in that**
the gas mixture which flows out of the third catalyst bed (30) in the direction of the outlet (4) is cooled in a third heat exchanger (31), and the first catalyst bed (10), the second catalyst bed (20) and the third catalyst bed (30) being arranged in a cylindrical reaction region (2.1) of the pressure vessel (2), the pressure vessel (2) having a central tube (50) which runs along a cylinder axis (Z) of the reaction region (2.1) and via which the inlet (3) of the pressure vessel (2) is connected to the third heat exchanger (31).

## Revendications

1. Réacteur de conversion catalytique d'un mélange gazeux, notamment pour la synthèse catalytique d'ammoniac à partir d'un mélange gazeux comprenant sensiblement de l'azote et de l'hydrogène, ledit réacteur comprenant
- un récipient sous pression (2) pourvu d'une entrée (3) destinée au mélange gazeux et d'une sortie (4) destinée au produit de réaction,
- un premier lit de catalyseur (10), un deuxième lit de catalyseur (20) et un troisième lit de catalyseur (30), qui sont disposés de telle sorte que le mélange gazeux introduit par l'entrée (4) passe d'abord par le premier lit de catalyseur (10), puis par le deuxième lit de catalyseur (20) et enfin par le troisième lit de catalyseur (30) jusqu'à la sortie (4),
- un premier échangeur de chaleur (11) destiné à refroidir le mélange gazeux sortant du premier lit de catalyseur (10) et
- un deuxième échangeur de chaleur (21) destiné à refroidir le mélange gazeux sortant du deuxième lit de catalyseur (20),
**caractérisé en ce que**
le réacteur (1) comporte un troisième échangeur de chaleur (31) destiné à refroidir le mélange gazeux sortant du troisième lit de catalyseur (30) en direction de la sortie (4) et en que le premier lit de catalyseur (10), le deuxième lit de catalyseur (20) et le troisième lit de catalyseur (30) sont disposés dans une zone de réaction cylindrique (2.1) du récipient sous pression (2), le récipient sous pression (2) comportant un tube central (50) qui s'étend le long d'un axe de cylindre (Z) de la zone de réaction (2.1) et qui relie l'entrée (3) du récipient sous pression (2) au troisième échangeur de chaleur (31).

2. Réacteur selon la revendication 1, **caractérisé en ce que** le tube central (50) s'étend à travers un évidement central du premier échangeur de chaleur (11) et un évidement central du deuxième échangeur de chaleur (21).

3. Réacteur selon l'une des revendications précédentes, **caractérisé en ce que** le premier échangeur de chaleur (11), le deuxième échangeur de chaleur (21) et le troisième échangeur de chaleur (31) sont reliés entre eux, notamment par des conduites (5), de manière à ce que le mélange gazeux est amené du troisième échangeur de chaleur (31) au premier échangeur de chaleur (11) par le biais du deuxième échangeur de chaleur (21).

4. Réacteur selon l'une des revendications précédentes, **caractérisé en ce que** le troisième lit de catalyseur (30) se présente sous la forme d'un cylindre creux, le troisième échangeur de chaleur (31) étant entouré concentriquement par le troisième lit de catalyseur (30).

5. Réacteur selon l'une des revendications précédentes, **caractérisé en ce que** le troisième échangeur de chaleur (31) est conçu comme un échangeur de chaleur à tube, en particulier comme un échangeur de chaleur à tube en U.

6. Réacteur selon l'une des revendications précédentes, **caractérisé en ce que** le troisième échangeur de chaleur (31) est relié par une conduite de dérivation (9) à une entrée de commande (8) du récipient sous pression (2).

7. Réacteur selon l'une des revendications précédentes, **caractérisé en ce que** le premier lit de catalyseur (10), le deuxième lit de catalyseur (20) et le troisième lit de catalyseur (30) sont disposés à l'intérieur du récipient sous pression (2) de manière à être traversés par le mélange gazeux dans un sens d'écoulement radial.

8. Insert destiné à un récipient sous pression (2) d'un réacteur (1) pour la conversion catalytique d'un mélange gazeux, notamment pour la synthèse catalytique d'ammoniac à partir d'un mélange gazeux comprenant sensiblement de l'azote et de l'hydrogène, ledit insert comprenant
- un premier lit de catalyseur (10), un deuxième lit de catalyseur (20) et un troisième lit de catalyseur (30), qui sont disposés de telle sorte que le mélange gazeux introduit par l'entrée (3) du récipient sous pression (2) passe d'abord par le premier lit de catalyseur (10), puis par le deuxième lit de catalyseur (20) et enfin par le troisième lit de catalyseur (30) jusqu'à la sortie (4),
- un premier échangeur de chaleur (11) destiné à refroidir le mélange gazeux sortant du premier lit de catalyseur (10) et
- un deuxième échangeur de chaleur (21) destiné à refroidir le mélange gazeux sortant du deuxième lit de catalyseur (20),
**caractérisé en ce que**
l'insert (60) comporte un troisième échangeur de chaleur (31) destiné à refroidir le mélange gazeux sortant du troisième lit de catalyseur (30) en direction de la sortie (4) du récipient sous pression (2) et en que le premier lit de catalyseur (10), le deuxième lit de catalyseur (20) et le troisième lit de catalyseur (30) sont disposés dans une zone de réaction cylindrique (2.1) du récipient sous pression (2), le récipient sous pression (2) comportant un tube central (50) qui s'étend le long d'un axe de cylindre (Z) de la zone de réaction (2.1) et qui relie l'entrée (3) du récipient sous pression (2) au troisième échangeur de chaleur (31).

9. Procédé de conversion catalytique d'un mélange gazeux, notamment pour la synthèse catalytique d'ammoniac à partir d'un mélange gazeux comprenant sensiblement de l'azote et de l'hydrogène, dans un réacteur (1) comprenant un récipient sous pression (2),
- le mélange gazeux étant introduit par une entrée (3) du récipient sous pression (2) et le produit de réaction étant retiré par une sortie (4) du récipient sous pression (2),
- le mélange gazeux introduit par l'entrée (3) passant d'abord par le premier lit de catalyseur (10), puis par le deuxième lit de catalyseur (20) et enfin par le troisième lit de catalyseur (30) jusqu'à la sortie (4),
- le mélange gazeux sortant du premier lit de catalyseur (10) étant refroidi dans un premier échangeur de chaleur (11) et
- le mélange gazeux sortant du deuxième lit de catalyseur (20) étant refroidi dans un deuxième échangeur de chaleur (21),
**caractérisé en ce que**
le mélange gazeux sortant du troisième lit de catalyseur (30) en direction de la sortie (4) est refroidi dans un troisième échangeur de chaleur (31), et le premier lit de catalyseur (10), le deuxième lit de catalyseur (20) et le troisième lit de catalyseur (30) étant disposés dans une zone de réaction cylindrique (2.1) du récipient sous pression (2), le récipient sous pression (2) comportant un tube central (50) qui s'étend le long d'un axe de cylindre (Z) de la zone de réaction (2.1) et qui relie l'entrée (3) du récipient sous pression (2) au troisième échangeur de chaleur (31).
